**Europäisches Patentamt**

**European Patent Office**

**Office européen des brevets**

(11) Veröffentlichungsnummer: **0 039 762**

**A1**

(12) **EUROPÄISCHE PATENTANMELDUNG**

(21) Anmeldenummer: **81101524.7**

(22) Anmeldetag: **04.03.81**

(51) Int. Cl.³: **F 23 L 15/04**
**F 23 D 17/00**

(30) Priorität: **08.05.80 DE 3017618**

(43) Veröffentlichungstag der Anmeldung:
**18.11.81 Patentblatt 81/46**

(84) Benannte Vertragsstaaten:
**AT FR GB IT SE**

(71) Anmelder: **Wünning, Joachim, Dr.-Ing.**
**Bergstrasse 20**
**D-7250 Leonberg 7 (Warmbronn)(DE)**

(72) Erfinder: **Wünning, Joachim, Dr.-Ing.**
**Bergstrasse 20**
**D-7250 Leonberg 7 (Warmbronn)(DE)**

(74) Vertreter: **Patentanwälte Dipl.-Ing. W. Scherrmann**
**Dr.-Ing. R. Rüger**
**Webergasse 3 Postfach 348**
**D-7300 Esslingen (Neckar)(DE)**

(54) **Verfahren zur Wärmerückgewinnung bei öl- oder gasbeheizten Brennern für Industrieöfen oder dergleichen und Brenner dazu.**

(57) Bei einem Verfahren zur Wärmerückgewinnung bei öl- oder gasbeheizten Brennern mit rekuperativer Verbrennungsluftvorwärmung für Industrieöfen oder dergleichen wird zur Ermöglichung der Ausnutzung der Restwärme der Abgase ohne Beeinträchtigung des Brennerbetriebes derart vorgegangen, daß anschließend an die Verbrennungsluftvorwärmung unmittelbar an dem Brenner mit dem noch Restwärme enthaltenden Abgas ein Wärmeträgermedium beheizt wird, das sodann in einem getrennten Kreislauf über einen Wärmeverbraucher geführt wird.

Ein zur Durchführung dieses Verfahrens eingerichteter öl- oder gasbeheizter Brenner weist zusätzlich zu einem von der Verbrennungsluft und dem Verbrennungsabgas durchströmten zur rekuperativen Verbrennungsluftvorwärmung dienenden ersten Wärmetauscher (12), einen zusätzlichen sekundärseitig von dem Wärmeträgermedium beaufschlagten zweiten Wärmetauscher (25) auf, der primärseitig von dem aus dem ersten Wärmetauscher (12) austretenden Abgas beheizt ist und durch den das Abgas bis auf eine vorbestimmte Resttemperatur auskühlbar ist.

Patentanwälte  Dipl.-Ing. W. Scherrmann  Dr.-Ing. R. Rüger

**0039762**

7300 Esslingen (Neckar). Webergasse 3. Postfach 348

3. März 1981

PA 4 EU rüeh

Telefon
Stuttgart (0711) 35 65 39
35 96 19
Telex      07 256610 smru
Telegramme Patentschutz
Esslingenneckar

- 1 -

Dr.-Ing. Joachim Wünning, Bergstraße 20,
7250 Leonberg 7 (Warmbronn)

Verfahren zur Wärmerückgewinnung bei öl- oder
gasbeheizten Brennern für Industrieöfen oder
dergleichen und Brenner dazu

Die Erfindung betrifft ein Verfahren zur Wärmerückgewinnung bei öl- oder gasbeheizten Brennern mit rekuperativer Verbrennungsluftvorwärmung für Industrieöfen oder dergleichen, sowie einen zur Durchführung eines solchen Verfahrens eingerichteten öl- oder gasbeheizten Brenner für Industrieöfen oder dergleichen mit einem von der Verbrennungsluft und den Verbrennungsabgasen durchströmten ersten Wärmetauscher zur rekuperativen Verbrennungsluftvorwärmung im Brenner.

Zur direkten und indirekten Beheizung von Industrieöfen und sonstigen wärmetechnischen Anlagen werden mit gasförmigen oder flüssigen Brennstoffen betriebene Brenner mit rekuperativer Luftvorwärmung eingesetzt, von denen einer beispielsweise in der DE-OS 2 742 070 beschrieben ist. Bei einem solchen sogenannten Reku-Brenner wird eine entsprechende Abgasmenge im Brenner selbst zurückgeführt, um mit Hilfe eines als Rekuperator wirkenden Wärmetauschers in dem Brenner einen Teil der Abgaswärme auf die Verbrennungsluft zu übertragen. Dabei kann bei den wichtigsten Brennstof-

fen Erdgas, Flüssiggas oder Öl bis zu etwa 60% der Abgaswärme zurückgewonnen werden; darüberhinaus würde der Aufwand für die Wärmerückgewinnung zu groß, weil die Wärmetauscherflächen des Rekuperators begrenzt sind und der Wärmekapazitätsstrom des Abgases größer ist als der der Verbrennungsluft. Die Restwärme der eine Temperatur von 300 bis etwa 600$^{\circ}$ C aufweisenden Abgase geht deshalb verloren.

Aufgabe der Erfindung ist es deshalb, einen Weg zu weisen, der es gestattet, auch diese nach der Verbrennungsmittelvorwärmung noch verbleibende Restwärme der Abgase auszunutzen, ohne daß dadurch der Brenner in seinem Betrieb beeinträchtigt würde.

Zur Lösung dieser Aufgabe wird erfindungsgemäß derart vorgegangen, daß anschließend an die Verbrennungsluftvorwärmung unmittelbar an dem Brenner mit dem noch Restwärme enthaltenden Abgas ein Wärmeträgermedium beheizt wird, das sodann in einem getrennten Kreislauf über einen Wärmeverbraucher geführt wird.

Das Wärmeträgermedium kann beispielsweise Wasser, Druckwasser oder Thermalöl sein.

Dadurch, daß die Übertragung der Restwärme des Abgases auf das Wärmeträgermedium unmittelbar am Brenner erfolgt, ergibt sich ein sehr einfaches Abgasrückführungssystem, bei dem die Abgasleitungen meist überhaupt nicht wärmeisoliert zu werden brauchen. Außerdem können die Abgasleitungen kleiner bemessen werden, weil die Strömungsverluste mit der Temperatur zurückgehen.

**0039762**

Gleichzeitig kann der übliche Abgasinjektor mit nachgeschaltetem Zugunterbrecher zum Druckausgleich mit der Atmosphäre beibehalten werden, während andererseits die Regelverhältnisse in dem Brenner selbst durch die Wärmerückgewinnung nicht beeinflußt werden.

Dazu ist es vorteilhaft, wenn das Wärmeträgermedium in einem konstanten Mengenstrom in seinem Kreislauf geführt wird. Dieser Mengenstrom ist unabhängig vom Regelzustand des Brenners eingestellt.

Als Wärmeverbraucher kommen verschiedene Prozesse in Frage, wie Heizen, Waschen, Trocknen oder Vorwärmen des Gutes selbst. Die Temperatur des Wärmeträgermediums-Kreislaufes ist dem Bedarf angepaßt und kann mit Druckwasser oder Thermalöl bis auf 250$^{\circ}$ C gesteigert werden, wenn die dadurch bedingte Abnahme der Wärmerückgewinnung in Kauf genommen werden kann.

Beispielsweise bei Industrieofenanlagen, deren Öfenräume mit mehreren Brennern beheizt sind, kann die Anordnung derart getroffen werden, daß das Wärmeträgermedium in mehreren insoweit parallelgeschalteten Brennern beheizt wird.

Der zur Durchführung des neuen Verfahrens eingerichtete, eingangs genannte Brenner ist gemäß weiterer Erfindung dadurch gekennzeichnet, daß er einen zusätzlichen, sekundärseitig von dem Wärmeträgermedium beaufschlagten zweiten Wärmetauscher enthält, der primärseitig von dem aus dem ersten Wärmetauscher austretenden Abgas beheizt ist und durch den das Abgas bis auf eine vorbestimmte Resttemperatur auskühlbar ist.

Der Brenner ist auf die Summe des Druckverlustes in dem als Rekuperator wirkenden ersten Wärmetauscher und dem zweiten Zusatz-Wärmetauscher eingestellt, so daß im Regelbetrieb keine Veränderungen auftreten.

Sehr einfache konstruktive Verhältnisse ergeben sich, wenn der zweite Wärmetauscher als Baueinheit in dem Brenner eingesetzt ist. Dabei kann der zweite Wärmetauscher mit Vorteil als Ringrohr-Wärmetauscher ausgebildet sein.

Industriebrenner mit rekuperativer Luftvorwärmung werden vielfach mit einem zylindrischen, als Rekuperator dienendem ersten Wärmetauscher ausgerüstet, bei dem die Verbrennungsluft in einem inneren und das Abgas in einem äußeren Ringraum geführt sind. Bei einem solchen Brenner ist es zweckmäßig, daß der zweite Wärmetauscher in dem abgasdurchströmten Ringraum des Brennerkopfes strömungsmäßig hinter dem ersten Wärmetauscher liegend eingebaut ist. Damit entsteht kein zusätzlicher Raumbedarf für den zweiten Wärmetauscher; die Leitungsverluste entfallen vollkommen und der auftretende Strömungsverlust ist sehr gering.

Wie bereits erwähnt, kann dem zweiten Wärmetauscher ein in einer Abgasleitung liegender Abgasinjektor nachgeschaltet sein, der zum Druckausgleich mit der Atmosphäre dient, um damit unabhängig von Atmosphärendruckschwankungen einen einwandfreien Brennerbetrieb zu gewährleisten.

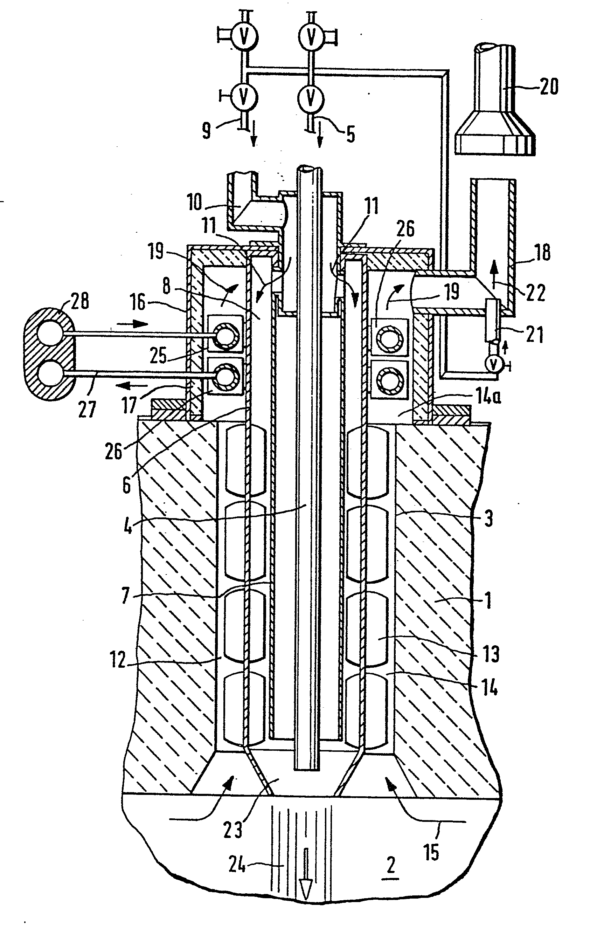

In der Zeichnung ist ein Ausführungsbeispiel des Gegenstandes der Erfindung dargestellt. Die Figur zeigt einen Brenner gemäß der Erfindung im axialen Schnitt in einer Seitenansicht und in schematischer Darstellung.

Der in der Figur dargestellte Brenner dient zur direkten Beheizung einer durch eine Ofenwand 1 begrenzten Ofenkammer 2; er ist in eine entsprechende Öffnung 3 der Ofenwand 1 eingesetzt.

Der Brenner selbst weist ein zentrisch angeordnetes Brennstoffzufuhrrohr 4 auf, dem über eine Leitung 5 flüssiger oder gasförmiger Brennstoff zugeführt werden kann. Das Brennstoffzufuhrrohr 4 ist von einem konzentrischen Luftzufuhrrohr 6 umgeben, das mit einem ebenfalls konzentrischen innenliegenden Luftleitzylinder 7 einen Ringraum 8 einschließt, in den über eine Leitung 9 und einen Luftzufuhrstutzen 10 Verbrennungsluft einströmt, wie dies durch Pfeile 11 angedeutet ist.

Das Luftzufuhrrohr 6 bildet einen Teil eines als Rekuperator wirkenden ersten Wärmetauschers 12, der als Rippenwärmetauscher ausgebildet ist und dessen Rippen 13 einerseits in den von der Verbrennungsluft durchströmten Ringraum 8 und andererseits in einen zwischen der Wandung der Öffnung 3 der Ofenwand 1 und dem Luftzufuhrrohr 6 begrenzten Ringraum 14 ragen, welcher von den Abgasen durchströmt ist, wie dies durch Pfeile 15 angedeutet ist.

Der abgasdurchströmte Ringraum 14 setzt sich im Brennerkopf 16 in einem entsprechenden, zwischen dem Luftzufuhrrohr 6 und der wärmeisolierten Gehäusewand 17 des Brennerkopfes 16 liegenden Ringraum 14a fort, in den ein Abgasabführrohr 18 mündet, in das die Abgase, wie durch Pfeile 19 angedeutet, gesammelt eintreten und das zu einem Schornstein 20 führt. In dem Abgasabführrohr 18 ist ein sogenannter Abgasinjektor 21 vorgesehen, der an die Luftzuführleitung 9 angeschlossen ist und es gestattet, in der durch einen Pfeil 22 angedeuteten Weise Luft in das Abgaszufuhrrohr 18 einzublasen, um damit Druckschwankungen der Atmosphäre einzublasen, um damit Druckschwankungen der Atmosphäre auszugleichen, so daß der Brenner konstante Verbrennungsbedingungen aufweist.

Im Betrieb vermischt sich der über das Brennstoffzufuhrrohr 4 zugeführte Brennstoff im Bereiche des Brennermundes 23 mit der über den Ringraum 14 koaxial zuströmenden Verbrennungsluft, womit nach der Zündung ein bei 24 angedeuteter Flammenstrahl entsteht, der in die Ofenkammer 2 gerichtet ist und diese beheizt. Auf ihrem Weg zu dem Brennermund 23 wird die Verbrennungsluft in dem Ringkanal 14 durch den ersten Wärmetauscher 12 dadurch vorgewärmt, daß den den ersten Wärmetauscher 12 in dem Ringkanal 14 primärseitig durchströmenden Abgasen eine entsprechende Wärmemenge entzogen wird. Die in dem ersten Wärmetauscher 12 auf diese Weise teilweise ausgekühlten Abgase weisen beim Eintritt in den Ringkanal 14a des Brennerkopfes 16, d.h. bei dem Austritt aus dem ersten Wärmetauscher 12 noch eine Temperatur von ca. 300 bis 600° C auf. Um einen möglichst großen Teil dieser Restwärme zurückzugewinnen, ist in dem abgasdurchströmten Ringraum 14a des Brennerkopfes 16 ein zweiter Wärmetauscher 25 angeordnet, der primärseitig von diesen Abgasen beheizt ist. Der zweite Wärmetauscher 25 ist als Ringrohrwärmetauscher mit zwei Rippenrohrringen 26 ausgeführt, dessen Rippenrohrringe in der aus der Figur ersichtlichen Weise koaxial zueinander angeordnet sind.

Sekundärseitig ist der zweite Wärmetauscher 25 mit einem Wärmeträgermedium, beispielsweise Druckwasser oder Thermalöl, beaufschlagt, das in einem eigenen Kreislauf über Leitungen 27 und einen bei 28 schematisch angedeuteten Wärmeverbraucher, etwa in Gestalt eines Wärmetauschers, geführt ist.

In dem zweiten Wärmetauscher 25 wird das Abgas weiter ausgekühlt, bis es dann über das Abgasabführrohr 18 in die Atmosphäre abgeführt wird.

Das Wärmerückgewinnungsverfahren soll im folgenden an einem praktischen Ausführungsbeispiel veranschaulicht werden:

### Ausführungsbeispiel

Ein Brenner mit rekuperativer Luftvorwärmung weist die in der Figur veranschaulichte grundsätzliche Bauart auf. Sein Anschlußwert beträgt 50 kW. Der als Rekuperator dienende zylindrische erste Wärmetauscher 12 hat einen Durchmesser von 160 mm bei einer Länge von 400 mm. Bei einer Abgasmenge von 56 $m^3$/h wird in ihm etwa die Hälfte der Abgaswärme auf die Verbrennungsluft, die in einer Menge von 50 $m^3$/h zugeführt wird, übertragen. Das bedeutet, daß die Temperatur (in Grad Celsius) der Abgase vom Eintritt bis zum Austritt in den ersten Wärmetauscher 12 etwa halbiert wird.

Der in dem abgasdurchströmten Ringraum 14a des Brennerkopfes 16 angeordnete zweite Zusatz-Wärmetauscher 25 ist mit zwei Rippenrohrringen 26 mit einem Rohrdurchmesser von 15 mm und einer Rippenfläche von 35 x 35 mm ausgelegt; sein "k.F"-Wert beträgt 32 W/K. Hierin bedeutet k = Wärmedurchgangskoeffizient in $W/m^2$.Kalorien und F = wirksame Rekufläche in $m^2$.

Diesem zweiten Wärmetauscher 25 werden als Wärmeträgermedium in dem Kreislauf ständig 500 kg/h Druckwasser mit 5 bar und $120^o$ C zugeführt.

Unter diesen Voraussetzungen werden 75% der bei dem Temperaturgefälle rückgewinnbaren Wärmemenge von dem Abgas auf das Druckwasser übertragen.

Wenn man davon ausgeht, daß in der Ofenkammer 2 ein Wärmeprozeß bei $1000^o$ C durchgeführt wird und die Nutzwassertemperatur in dem Sekundärkreislauf des zweiten Wärmetauschers 25 $120^o$ C beträgt, ergeben sich folgende Werte für die Abgastemperatur und den zugehörigen Brennstoffausnutzungsgrad in Prozent:

Abgastemperatur Eintritt 1. Wärmetauscher 12: $1000^o$ C ($\eta$ = 51%)
Abgastemperatur Austritt 1. Wärmetauscher 12: $500^o$ C ($\eta$ = 77%)
Abgastemperatur Eintritt 2. Wärmetauscher 25: $500^o$ C ($\eta$ = 77%)
Abgastemperatur Austritt 2. Wärmetauscher 25: $220^o$ C ($\eta$ = 90%)

Der zusätzliche Wärmerückgewinn durch den zweiten Wärmetauscher 25 beträgt somit rund 13% oder 3,3 kW, wodurch das Wasser um $11^o$ K erwärmt wird.

Der Wärmerückgewinn an dem zweiten Wärmetauscher 25 steigt mit der Prozeßtemperatur in der Ofenkammer 2 und damit mit der Abgastemperatur; er fällt naturgemäß etwas ab, wenn die Temperatur des Wärmeträgermediums in dem Wärmeträgermediumskreislauf erhöht wird. Selbstverständlich kann der Wärmerückgewinn durch entsprechende Vergrößerung der Wärmeübertragerflächen des zweiten Wärmetauschers 25 verbessert werden.

Der zweite Zusatz-Wärmetauscher 25 in dem abgasdurchströmten Ringraum 14a des Brennerkopfes 16 weist einen so geringen Druckverlust auf (bei dem angegeben Beispiel unter 10 mm WS), daß der Abgasinjektor 21 mit dem Druck der Verbrennungsluft (500 bis 1000 mm WS) arbeiten kann. Durch einen Zugunterbrecher kann eine gegenseitige Beeinflussung mehrerer Brenner einer Anlage im Regelbetrieb vermieden werden.

Bei einer solchen Anlage ist es dann zweckmäßig, wenn die zweiten Zusatz-Wärmetauscher 25 der einzelnen Brenner sekundärseitig parallelgeschaltet sind und somit gemeinsam das Wärmeträgermedium aufheizen.

Das Wärmeträgermedium ist in seinem Kreislauf in einem konstanten Mengenstrom geführt, was bedeutet, daß es unabhängig von dem Regelzustand des Brenners mit dem eingestellten Mengenstrom fließt.

Wie aus der Figur ersichtlich, ist der zweite Wärmetauscher 25 als Baueinheit in den Ringraum 14a des Brennerkopfes 16 eingebaut. Er könnte naturgemäß auch mit einer anderen Zahl von Rippenrohrringen 26 ausgebildet sein, wenn dies die für den jeweiligen Anwendungsfall erforderliche Wärmetauscherfläche notwendig macht. Grundsätzlich wäre es auch dankbar, diesen Wärmetauscher 25 in einer anderen Bauart, beispielsweise ähnlich dem ersten Wärmetauscher 12 auszuführen.

**0039762**

Patentansprüche:

1. Verfahren zur Wärmerückgewinnung bei öl- oder gasbeheizten Brennern mit rekuperativer Verbrennungsluftvorwärmung für Industrieöfen od. dgl., dadurch gekennzeichnet, daß anschließend an die Verbrennungsluftvorwärmung unmittelbar an dem Brenner mit dem noch Restwärme enthaltenden Abgas ein Wärmeträgermedium beheizt wird, das sodann in einem getrennten Kreislauf über einen Wärmeverbraucher geführt wird.

2. Verfahren nach Anspruch 1, dadurch gekennzeichnet, daß das Wärmeträgermedium in einem konstanten Mengenstrom in seinem Kreislauf geführt wird.

3. Verfahren nach Anspruch 1 oder 2, dadurch gekennzeichnet, daß das Wärmeträgermedium in mehreren insoweit parallelgeschalteten Brennern beheizt wird.

4. Zur Durchführung des Verfahrens nach einem der vorhergehenden Ansprüche eingerichteter öl- oder gasbeheizter Brenner für Industrieöfen od.dgl. mit einem von der Verbrennungsluft und dem Verbrennungsabgas durchströmten ersten Wärmetauscher zur rekuperativen Verbrennungsluftvorwärmung im Brenner, dadurch gekennzeichnet, daß er einen zusätzlichen, sekundärseitig von dem Wärmeträgermedium beaufschlagten zweiten Wärmetauscher (25) enthält, der primärseitig von dem aus dem ersten Wärmetauscher (12) austretenden Abgas beheizt ist und durch den das Abgas bis auf eine vorbestimmte Resttemperatur auskühlbar ist.

5. Brenner nach Anspruch 4, dadurch gekennzeichnet, daß der zweite Wärmetauscher (25) als Baueinheit in dem Brenner eingesetzt ist.

6. Brenner nach Anspruch 4 oder 5, dadurch gekennzeichnet, daß der zweite Wärmetauscher (25) als Ringrohr-Wärmetauscher ausgebildet ist.

7. Brenner nach einem der Ansprüche 4 bis 6, dadurch gekennzeichnet, daß der zweite Wärmetauscher (25) in einen abgasdurchströmten Ringraum (14a) des Brennerkopfes (16) strömungsmäßig hinter dem ersten Wärmetauscher (12) liegend eingebaut ist.

8. Brenner nach einem der Ansprüche 4 bis 7, dadurch gekennzeichnet, daß dem zweiten Wärmetauscher (25) ein in einer Abgasleitung (18) liegender, mit dem Druck der Verbrennungsluft beaufschlagter Abgasinjektor (21) nachgeschaltet ist.

9. Brenner nach einem der Ansprüche 4 bis 8, dadurch gekennzeichnet, daß sein zweiter Wärmetauscher (25) mit den zweiten Wärmetauschern (25) weiterer Brenner sekundärseitig parallelgeschaltet ist.

0039762

| Europäisches Patentamt | **EUROPÄISCHER RECHERCHENBERICHT** | EP 81101524.7 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 941 511 (VEREINIGTE ECONOMISERWERKE) <br> * Seite 2, Zeilen 102-117; Fig. 1 * <br> -- | 1,4 |
| | US - A - 2 787 256 (ILUNE) <br> * Spalte 3, Zeilen 68-74; Fig. 1 * <br> -- | 1,4 |
| | DE - C - 326 419 (RUPPMANN) <br> * Seite 1, Zeilen 1-15 * <br> -- | 1,4 |
| | AT - B - 223 729 (INDUGAS) <br> * Patentansprüche; Fig. 1 * <br> -- | 1,4,8 |
| A | AT - B - 251 166 (INDUGAS) <br> * Seite 2, Zeilen 36-41; Fig. 1 * <br> -- | 1,4 |
| D,A | DE - A1 - 2 742 070 (AICHELIN) <br> * Patentansprüche 1,4; Fig. 1 * <br> ----- | 1,4 |

**KLASSIFIKATION DER ANMELDUNG (Int. Cl.3)**

F 23 L 15/04
F 23 D 17/00

**RECHERCHIERTE SACHGEBIETE (Int. Cl.3)**

F 23 L 15/00
F 23 D 11/00
F 23 D 13/00
F 23 D 17/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt |
|---|---|

| Recherchenort | Abschlußdatum der Recherche | Prüfer |
|---|---|---|
| WIEN | 13-08-1981 | TSCHÖLLITSCH |

EPA form 1503.1 06.78